# EUROPÄISCHE PATENTSCHRIFT

(11) **EP 0 965 189 B1**
(45) Veröffentlichungstag und Bekanntmachung des Hinweises auf die Patenterteilung: **11.08.2004**
(21) Anmeldenummer: 97948794.9
(22) Anmeldetag: 24.10.1997
(51) Int. Cl.: H04B 10/00, G02B 6/43

(54) **OPTISCHES BUSSYSTEM**
OPTICAL BUS SYSTEM
SYSTEME A BUS OPTIQUE

(30) Priorität: 06.03.1997 DE 19709174
(43) Veröffentlichungstag der Anmeldung: 22.12.1999
(73) Patentinhaber: International Business Machines Corporation, Armonk, NY 10504 (US)
(72) Erfinder: STAIGER, Dieter, D-71093 Weil im Schönbuch (DE)
(74) Vertreter: Rach, Werner, Dr.
(86) Internationale Anmeldenummer: PCT/EP1997/005876
(87) Internationale Veröffentlichungsnummer: WO 1998/039861

(56) Entgegenhaltungen:
- DE-A- 3 908 786
- GB-A- 2 201 561
- GB-A- 2 300 775
- US-A- 5 221 308
- SRIKANTH NATARAJAN ET AL: "BI-DIRECTIONAL OPTICAL BACKPLANE BUS FOR GENERAL PURPOSE MULTI- PROCESSOR BOARD-TO-BOARD OPTOELECTRONIC INTERCONNECTS" JOURNAL OF LIGHTWAVE TECHNOLOGY, Bd. 13, Nr. 6, 1.Juni 1995, Seiten 1031-1040, XP000520975

## Beschreibung

Die vorliegende Erfindung betrifft ein System zur bidirektionalen optischen Übertragung von Informationen. Speziell betrifft sie die Verbindung von elektronischen Komponenten über ein bidirektionales optisches Bus-System.

Elektronische Systeme sind normalerweise zusammengesetzt aus einer Reihe fester und/oder variabler elektronischer Komponenten (Subsysteme), die miteinander durch einen Bus verbunden sind, der Signale von einer Komponente zur anderen transportiert.

So werden bspw. digitale Computersysteme auf diese Weise entworfen. Eine Anzahl von individuellen Karten oder elektronischen Komponenten bilden Subsysteme, die in ein Bussystem eingebunden werden, das Signale für Daten, Speicheradressen, Interrupts und dergleichen transportiert. Eine dieser Karten kann bspw. einen Prozessor für die Ausführung von Anwendungsprogrammen tragen, während andere wiederum Controller für Workstations oder Diplays, Adapter für Massenspeicher oder Interfaces für LANs (Local Area Networks) etc. enthalten können. Die Subsysteme können aber auch Navigationseinheiten, bspw. für den Einsatz in PKWs, sowie Video/Audio- oder Fernbedienungseinheiten umfassen.

Die funktionalen elektronischen Schaltkreise auf den einzelnen Karten bzw. Komponenten haben Zugang zu dem gemeinsamen Bus-System für die Übermittlung von Daten, Adressen und Kontrollsignalen entsprechend einem bestimmten Busprotokoll.

Diese Art des Packaging hat wichtige Vorteile. So kann bspw. eine unterschiedliche Anzahl verschiedenartiger Subsysteme innerhalb des Gesamtsystems konfiguriert werden. Eine Anpassung des Systems an die jeweilige Benutzerumgebung ist einfach und kann oft vom Anwender ohne weitere Hilfe vorgenommen werden.

Neue Funktionen und eine verbesserte Technologie können zu einem späteren Zeitpunkt problemlos integriert werden, ohne das gesamte System austauschen zu müssen. Des weiteren wird eine Diagnose sowie die Reparatur des Systems durch die Möglichkeit verbessert, einzelne Subsysteme zu isolieren.

Allerdings sind konventionelle, verdrahtete Bus-Systeme relativ teuer und weisen Nachteile auf. In dem Maße, wie die Elektroniktechnologie eine immer größere Integration erfährt, werden die Konnektoren für die Übermittlung von Signalen von einer Einheit zur anderen immer teurer bzw. die Zuverlässigkeit kann nur mit sehr hohen Kosten erreicht werden. Dazu kommt ein immer größerer Räumlichkeitsbedarf.

Es hat in der Literatur einige Vorschläge gegeben, die parallel verdrahteten ("Kupfer")- Backplane-Bussysteme für die Verbindung einzelner Subsysteme eines elektronischen Systems zu ersetzen, speziell im Bereich optischer Technologien. Trotz der Notwendigkeit, elektrische Hochgeschwindigkeitssignale in optische Signale zu verwandeln und umgekehrt, sind viele optische Backplane-Bussysteme vorgeschlagen worden. Optische Signale werden dabei jedoch immer nur von einem speziellen Punkt zu einem anderen speziellen Punkt innerhalb von Lichtleitfasern übertragen. Das größte Problem aber scheint darin zu liegen, daß vorgeschlagene optische Bussysteme, die evtl. dazu benutzt werden könnten, eine große Anzahl von elektronischen Komponenten zu verbinden, sehr viel teurer sind und nur mit erheblichem Aufwand so zuverlässig zu machen sind wie die verdrahteten Bussysteme, die sie ersetzen sollen. Exotische optische Komponenten, genaues Ausrichten innerhalb der Komponenten sowie die Größe der optischen Einheiten führten zum Scheitern der Anwendung von optischen Technologien in elektronischen Systemen, in denen eine Vielzahl von Komponenten untereinander über ein gemeinsames Bussystem kommunizieren müssen.

Es ist weiterhin bekannt, Lichtkommunikationssysteme zur seriellen und/oder parallelen Kommunikation zu verwenden, bspw.

Infrarot-Systeme bei der Lichtverteilung in offenen Räumen mit Luft als Medium (Fernbedienungen) oder aber Laser-Lichtsysteme über Lichtleitfasern.

Diese Systeme haben aber den Nachteil, dass entweder eine gegenseitige Beeinflussung die Anwendung auf den sogenannten Halb-Duplex-Betrieb beschränkt, wobei jeweils nur in einer Richtung gleichzeitig Signale gesendet werden können (IR-Fernbedienung) oder aber Lichtleitfasern bzw. Glasfaserkabel verwendet werden, die anfällig für Störungen sind, nur mit aufwendigen Stecksystemen betriebsfähig gemacht werden können, und bei denen Probleme beim Lichtübergang zwischen dem Kabel und der Steckverbindung (Stecker), bspw. durch Kondensation, entstehen (Laser-Lichtsysteme).

US-A-5,113,403 und US-A-5,204,866 offenbaren ein elektronisches System bestehend aus einer Vielzahl von Subsystemen bzw. elektronischen Komponenten, die durch einen optischen Bus verbunden sind. Die einzelnen elektronischen Komponenten sind derart in einem Gehäuse angeordnet, daß auf jeder Komponente angeordnete optische Interfaceeinheiten einen einachsigen, bidirektionalen, im freien Raum arbeitenden optischen Bus bilden, der elektrische Signale unter den einzelnen Komponenten verteilt. Diese Signale werden entlang einer einzelnen linearen Achse als polarisierte Lichtstrahlen übertragen. Dabei hat jede einzelne Komponente eine Bus-Interfaceeinheit für die Erzeugung abgehender Lichtstrahlen und für das Empfangen ankommender Strahlen, jeweils entlang beider Richtungen der Achse. Die Interfaceeinheiten verwenden Laser-Generatoren, Photodetektoren sowie Amplituden-Strahlenteiler.

Aus der DE 39 08 786 A1 ist eine Vorrichtung zur Datenübertragung bekannt, insbesondere zwischen Stellen einer Platine bzw. zwischen mehreren Platinen, die insbesondere in einem Gehäuse oder einem Gestell einsetzbar sind (Backplane-System). Die Vorrichtung zeichnet sich dadurch aus, dass zur Übertragung von Informationen innerhalb einer Platine bzw. zwischen mehreren Platinen jede Platine einen Sender und/oder einen Empfänger zur drahtlosen Übertragung der Daten oder Informationen aufweist, und dass die Übertragungswege z.B. über Luft- oder Gas-Wege, Vakuum oder Lichtleiter- Kanäle erfolgen.

Die UK 2 300 775 A offenbart eine optische Verbindung zwischen elektrischen Modulen. Elektrische Steuerungsmodule sind über ein weiteres Modul, das optische Fasern aufweist, optisch miteinander verbunden. Alle Module sind mit Halteschellen ausgestattet, um sie in einem Baugruppenträger befestigen zu können. Infrarotes Licht wird von LEDs durch optische Fasern zu den verschiedenen Modulen transportiert. Dies gewährleistet eine elektrische Isolation. Alternativ kann die Übertragung direkt zwischen zwei Modulen stattfinden.

Srikanth Nataranjan et al., "Bi-Directional Optical Backplane Bus for General Purpose Multi-Processor Board-to-Board Optoelectronic Interconnects" offenbart einen bidirektionalen optischen rückwandseitigen Datenbus für universelle, optoelektronische Multiprozessor Baugruppe zu Baugruppe Verbindungen. Der vorgestellte rückwandseitige Datenbus beinhaltet eine Matrix von polymerbasierten Wellenführungshologrammen in Verbindung mit einer Wellenführungsplatte.

Aus der UK 2 201 561 A ist ein Datenverarbeitungssystem bekannt, das eine Vielzahl an Datenverarbeitungsmodulen umfasst, die lösbar ein einem Baugruppenträger eingesetzt sind, wobei eine optische Datenverbindungsanordnung die Module untereinander verbindet. Die optische Datenverbindungsanordnung umfasst einen gestreckten Lichtpfad in Form eines oder mehrerer Licht transportierender Stäbe, welche die Module verbinden.

Trotz einer Verbesserung der Technik sind diese Systeme aber weiterhin kostenintensiv und erlauben nur sehr eingeschränkt eine kompakte Bauweise, da jede einzelne Komponente optische Interfaceeinheiten benötigt.

Des weiteren zeigen diese Systeme aufgrund der Vielzahl der verwendeten optischen Elemente eine geringere Zuverlässigkeit.

Es ist daher die Aufgabe der vorliegenden Erfindung, ein System zur bidirektionalen optischen Übertragung von Informationen bereitzustellen, das zum einen die Vorteile der optischen Technologien nutzt und zum anderen kostengünstig ist, eine hohe Verlässlichkeit bzgl. Störungen zeigt und außerdem eine kompakte Bauweise der einzelnen elektronischen Komponenten erlaubt.

Diese Aufgabe wird erfindungsgemäß durch ein System zur bidirektionalen optischen Übertragung von Informationen mit Hilfe diffusen Lichts zwischen mehreren elektronischen Komponenten mit n Übertragungsstrecken nach Anspruch 1 sowie dem Verfahren nach Anspruch 14 gelöst.

Weitere vorteilhafte Ausgestaltungen des erfindungsgemäßen Systems sind in den Unteransprüchen beschrieben.

Bei dem erfindungsgemäßen System ist für mindestens (n-1) Übertragungsstrecken eine Ummantelung vorgesehen, derart, daß eine gegenseitige Behinderung der einzelnen Übertragungsstrecken verhindert wird. Dabei kann eine einzelne Übertragungsstrecke als sogenannte "offene Übertragungsstrecke" ausgebildet sein, d.h., diese Übertragungsstrecke wird nicht ummantelt. Das durch diese Übertragungsstrecke geleitete diffuse Licht kann sich dann zwar frei ausbreiten, aufgrund der Ummantelung der anderen Übertragungsstrecken werden diese jedoch nicht beeinflußt.

Das erfindungsgemäße System bietet den Vorteil, daß hierbei die Vorteile eines optischen Informationsübertragungssystems, wie bspw. geringe Störanfälligkeit, Voll-Duplex-Betrieb und, bei mehrkanaliger Ausführung, Real-Time-Anwendungsmöglichkeit durch die Anwendung von kostengünstigen Empfänger- bzw. Sendeeinrichtungen, optimal ausgenutzt werden können. Normalerweise besteht bei Ausbreitung diffusen Lichts im freien Raum das Problem, daß ohne Anwendung teurer Modulationsverfahren Licht ohne gegenseitige Beeinflußung nur in einer Richtung gleichzeitig gesendet werden kann. Dies ist für Anwendungen tragbar, bei denen es ausreicht, den Informationsgehalt nur langsam weiterzugeben. Für gewisse Anforderungen jedoch, bspw. für eine Anwendung in PKWs, ist dies nicht akzeptabel, da hier ein schneller Austausch von Informationen mit Echtzeitverhalten wichtig ist. Durch das erfindungsgemäße Übertragungssystem wird dieser Nachteil behoben.

Als diffuses Licht kann bspw. Infrarotlicht (IR-Licht) verwendet werden, es ist aber auch jedes andere diffuse Licht geeignet.

Die Verwendung von IR-Licht als Beispiel für diffuses Licht ermöglicht es, Standard IrDA (Infrared Data Association)-Elemente, wie bspw. Infrarot-Empfänger oder -Sendeeinheiten zu verwenden und dabei ohne elektrische Konnektoren, optische Koppler-Devices oder komplizierte optische Stecksysteme auszukommen. Dabei ist keine aufwendige Modulationsart des Lichtes, wie z.B. Phaseshift Keying, Frequenz- oder Polarisationsmodulation notwendig, sondern die Informationen werden einfach durch die normalen Zustände "Licht ein" und "Licht aus" (On-Off-Keying) übertragen. Als Übertragungsprotokoll können bekannte Verfahren verwendet werden.

Ein weiterer Vorteil der Verwendung von IR-Licht liegt darin, daß das System als echtes "Real-Time-System" arbeiten kann, d.h., es entstehen nur minimale Konfliktzeiten (latency). Des weiteren ist ein Bus-Transfer möglich, der einen gleichzeitigen Zugriff mehrerer Benutzer auf das Bus-System erlaubt (Simultaneous Multi User Access).

Da bei der Verwendung von Infrarotlicht keinerlei elektrische Felder erzeugt werden und das System auch unempfindlich gegen solche Felder ist, kann es idealerweise in einer sensitiven Umgebung verwendet werden. Weiterhin ist es unempfindlich gegenüber Erschütterungen, Vibrationen und dem jeweiligen Umfeld. So weist es eine äußerst geringe Störanfälligkeit gegenüber Kondenswasser, Staub, UV-Strahlung, etc. auf.

Bei den verwendeten Subsystemen kann es sich um beliebige miteinander kommunizierende Einheiten handeln, bspw. Prozessoren, aber auch Geräte wie Funktelefon, TV, Navigationseinheiten oder graphische Einheiten, Audio/Video-Einheiten und Fernbedienungssysteme.

Das erfindungsgemäße System wird im folgenden anhand der Zeichnungen näher erläutert.

Es zeigt
- Fig. 1: eine schematische Darstellung der Funktionsweise des erfindungsgemäßen Übertragungssystems,
- Fig. 2: eine vergrößerte Darstellung des erfindungsgemäßen Übertragungssystems mit mehreren, nebeneinander angeordneten Übertragungsstrecken,
- Fig. 3: eine einzelne elektronische Komponente als Teil des erfindungsgemäßen Übertragungssystems,
- Fig. 4: mehrere hintereinander angeordnete elektronische Komponenten innerhalb des erfindungsgemäßen Übertragungssystems; und
- Fig. 5: eine schematische Darstellung der Möglichkeit des gleichzeitigen Zugriffs meherer Benutzer auf das erfindungsgemäße Übertragungssystem.

Im vorliegenden Beispiel soll das diffuse Licht, das zur optischen Übertragung der Informationen dient, aus IR-Licht bestehen. Es ist jedoch auch jedes andere diffuse Licht verwendbar, bspw. diffuses Laserlicht, Elektrolumineszenz, etc. Die Verwendung von Licht im Infrarotwellenlängenbereich (bspw. 870 nm) als Übertragungsmedium hat den Vorteil, daß relativ preiswerte, in der Konsumgüterindustrie geläufige Standardkomponenten, wie IR-Dioden und u. U. auch Photowiderstände als Sende- bzw. Empfangseinrichtungen verwendet werden können. Mit dem IrDA-physical-layer Protokoll steht zudem ein einfaches Übertragungsprotokoll zur Verfügung. Bei Verwendung anderer Sende- und Empfangseinrichtungen kann selbstverständlich jedes andere Übertragungsprotokoll herangezogen werden. Ein weiterer Vorteil der Verwendung von IR-Licht besteht darin, daß das System bedingt durch die voneinander getrennten Lichtübertragungsstrecken beste Voraussetzungen zum Aufbau eines "Real-Time-System" mit sich bringt. Dazu gehört u.a., daß hochpriore Informationen, also solche, die eine hohe Priorität geniessen, auch bevorzugt Zugriff zu bestimmten Übertragungsstrecken bekommen, während niederpriore Informationen auf andere Übertragungsstrecken "umgeleitet" werden. Des weiteren ist die Übertragungsgeschwindigkeit von Licht sehr hoch und im Anwendungsbeispiel nur in vernachlässigbarer Weise (10 cm entspreche ungefähr 333 ps) von der Übertragungslänge und der Belastung des Bussystems abhängig.

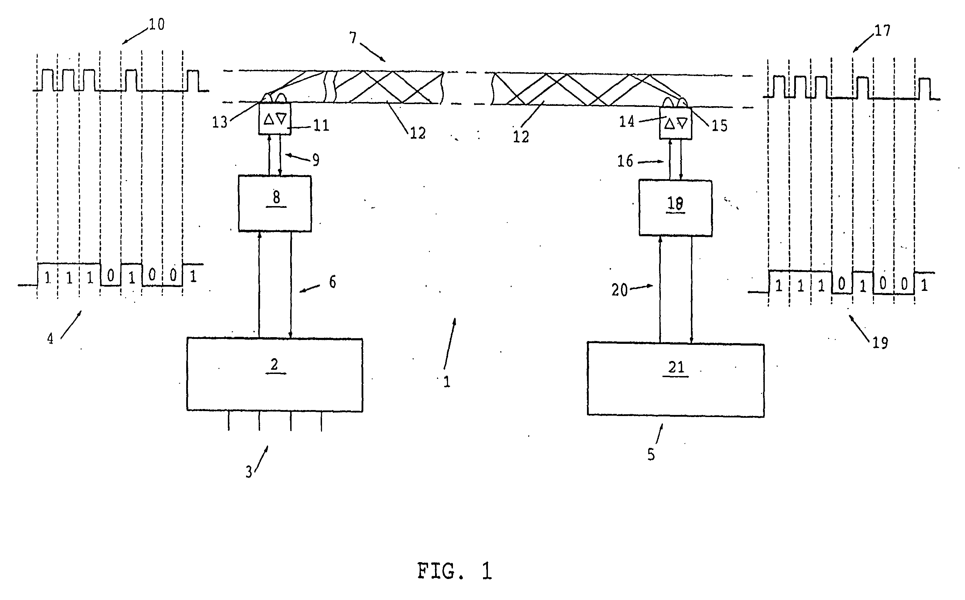

In Figur 1 ist schematisch die Funktionsweise des erfindungsgemäßen Übertragungssystems dargestellt. Ein elektronisches System 1 kommuniziert bspw. zwischen seinen Subsystemen 3, 5 über einen optischen Bus 7. Der Bus überträgt die entsprechenden Informationen dabei entlang bestimmter Übertragungsstrecken von einem Subsystem zum anderen. Will bspw. das Subsystem 3 Informationen an das Subsystem 5 übermitteln, so werden in einem entsprechenden Bauteil des Subsystems 3, bspw. einer processor unit (nicht gezeigt), elektrische Signale 4 erzeugt, die der zu übermittelnden Information entsprechen. Im vorliegenden Beispiel sollen diese Signale aus der Folge 11101001 bestehen. Diese Signale werden im folgenden über einen Bus Controller geleitet, der die Umformung auf das jeweilige Protokoll übernimmt, und dann über die Leitungen 6 an eine Umwandlungseinheit 8, bspw. einen Modulator/Demodulator, weitergeleitet.

Über die Leitungen 9 werden die Signale dann so weitergeleitet, daß die IR-Diode 13 als Sendeeinrichtung (Transmitter) entsprechend ein- und ausgeschaltet wird. Dabei bedeutet "1" in der gewählten Signalfolge "Licht an" und "0" bedeutet "Licht aus". Auf diese Weise werden die elektrischen Signale in Lichtsignale 10 umgewandelt. Es ist darauf hinzuweisen, daß bei der Verwendung von IrDA-Komponenten aufgrund deren AC-Kopplung eine Umwandlung in pulsierendes Licht erfolgen muß, d.h., bei einer Aufeinanderfolge von mehreren "1"-Signalen wird jedesmal die Diode ein- und wieder ausgeschaltet. Werden andere Komponenten verwendet, kann die Pulsierung u.U. entfallen. Im vorliegenden Beispiel ist auch ein die Signale verstärkender Amplifier (nicht gez eigt) zwischengeschaltet.

Das von der IR-Diode 13 ausgestrahlte, pulsierende Licht strahlt nun diffus in alle Richtungen aus. Wie bereits weiter oben angedeutet, können in dem erfindungsgemäßen Übertragungssystem mehrere Übertragungsstrecken nebeneinander vorliegen. Um eine gegenseitige Beeinflussung der Sende- und Empfangseinrichtungen dieser nebeneinander liegenden Übertragungsstrecken zu vermeiden, wird nun erfindungsgemäß das ausgestrahlte Licht entlang der vorgesehenen Übertragungsstrecke (im vorliegenden Beispiel vom Subsystem 3 zum Subsystem 5) in einer Ummantelung 12 geführt. Die Sende- und Empfangseinrichtungen ragen dabei in die Ummantelung hinein. Diese Ummantelung bildet somit einen geschlossenen "Kanal" zwischen den einzelnen Subsystemen.

Durch Reflektion entlang der Innenoberfläche der Ummantelung wird nun das diffuse Licht entlang der gewählten, durch die Ummantelung vorgegebenen Übertragungsstrecke weitergeleitet, bis es an seinem Zielort, dem Subsystem 5, ankommt. Dort trifft es auf die Empfangseinrichtung 14, die im vorliegenden Beispiel eine Photodiode 15 als Empfänger (Receiver) aufweist.

Es sind aber auch auf der Empfangsseite entsprechend andere Komponenten, wie bspw. Photowiderstände, etc., denkbar, wie der Fachmann unschwer erkennen kann.

Die so empfangenen Lichtsignale 17 werden nun durch die Empfangseinrichtung 14 wieder in elektrische Signale 19, die den Ausgangssignalen 4 entsprechen, umgewandelt und durch die Leitungen 16 zu einer Umwandlungseinheit 18, bspw. wieder ein Modulator/Demodulator, geleitet. Durch die Leitungen 20 werden die Signale dann an den Bus Controller 21 der empfangenden elektronischen Komponente 5 weitergegeben.

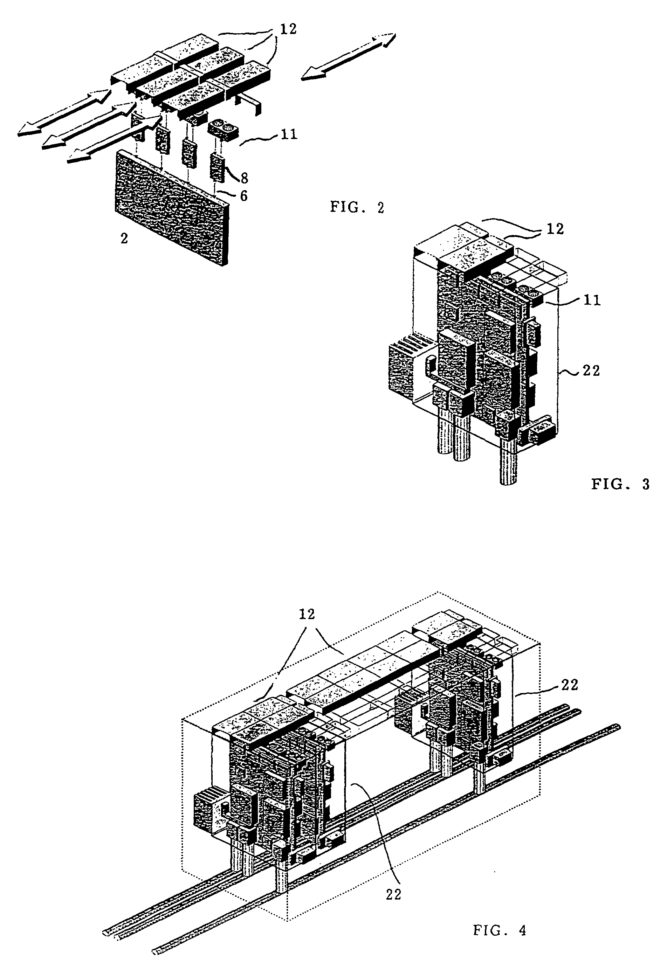

Fig. 2 zeigt eine vergrößerte Darstellung des Systems mit mehreren nebeneinander angeordneten ummantelten Übertragungsstrecken 12. Jede einzelne Übertragungsstrecke kann dabei für die Übertragung unabhängiger Informationen entlang der gezeigten Doppelpfeile in jeder Richtung genutzt werden. Durch die erfindungsgemäße Ummantelung beeinflussen sich dabei die Übertragungsstrecken gegenseitig nicht. In einer besonderen Ausführungsform des erfindungsgemäßen Systems sind acht Übertragungsstrecken vorgesehen, so daß maximal acht Kommunikationsebenen nebeneinnander vorliegen. Es kann jedoch jede beliebige Anzahl Übertragungsstrecken vorgesehen werden.

An den Empfangseinrichtungen können sogenannte "automatic gain control"-Vorrichtungen (nicht gezeigt) vorgesehen sein, die die auf ihrem Weg entlang der Übertragungsstrecke durch Absorption abgeschwächten Signale wieder verstärken bzw. zu intensive Signale entsprechend abschwächen.

In einer besonders vorteilhaften Ausgestaltung der Erfindung ist die Ummantelung integraler Bestandteil des Gehäuses 22 (Fig. 3), in das die elektronischen Komponenten (Subsysteme) eingebettet sind. Auf diese Art und Weise kann die Ummantelung im gleichen Arbeitsschritt wie die Gehäuse gefertigt werden. Außerdem ist keine "Backplane-Infrastruktur" notwendig, d.h., es müssen keine Subsysteme vorgehalten werden, da jedes weitere Gehäuse den Bus automatisch verlängert.

Fig. 3 zeigt eine einzelne Komponente mit den zugehörigen Sendeund Empfangseinrichtungen und den entsprechenden Ummantelungen.

Die Ummantelung weist bevorzugt eine lichtreflektierende Innenoberfläche auf, so daß das diffus ausgestrahlte Licht entlang der Ummantelung weitergeleitet werden kann. Bevorzugt ist die Innenoberfläche porös, damit das diffuse Licht möglichst ungeordnet in alle Richtungen reflektiert werden kann.

In einer besonders bevorzugten Ausführungsform besteht die Ummantelung aus Magnesium, da Magnesium ein sehr günstiges Verhältnis von Gewicht zu Stabilität aufweist. Es ist jedoch auch denkbar, jede andere poröse Metalloberfläche bzw. Kunststoff als Ummantelungsmaterial zu verwenden. Wichtig ist allein die Möglichkeit, das diffuse Licht entlang der Innenwand der Ummantelung weiterleiten zu können.

Da sich das diffuse Licht in alle Richtungen ausbreitet, ist die Form der Ummantelung nicht auf gerade Kanäle beschränkt. So können diese Kanäle in beliebiger Form, bspw. gebogen oder geknickt, geführt werden. Es ist jedoch vorteilhaft, verschiedene elektronische Komponenten in einer definierten räumlichen Anordnung hintereinander anzuordnen, um lange Wege zu vermeiden und Material zu sparen.

Fig. 4 zeigt eine solche räumliche Anordnung mehrerer Subsysteme hintereinander. Die einzelnen Komponenten sind jeweils über die ummantelten Kanäle 12 miteinander verbunden. Der Vorteil einer solchen Anordnung liegt in der modularen Aufbauweise. Es werden jeweils nur so viele Komponenten zusammen angeordnet, wie auch nötig sind. Ein solches stationäres System ist also beliebig erweiterbar. Auch Komponenten, die das optische Übertragungssystem nicht nutzen, können in diese Anordnung eingebunden werden. Hier muß dann jedoch zumindest ein Kanal vorhanden sein, der gewährleistet, daß die anderen Übertragungsstrecken nicht beeinflußt werden. Dieser Kanal muß zudem nicht unbedingt über Sende- und/oder Empfangseinrichtungen (Transceiver) verfügen.

Aufgrund der Ausschaltung der gegenseitigen Beeinflußung der Übertragungsstrecken ist es durch das erfindungsgemäße Übertragungssystem möglich, unter Verwendung von diffusem Licht mehrere Kommunikationsebenen störungsfrei nebeneinander zu betreiben. Es besteht also die Möglichkeit einer tatsächlichen Gleichzeitigkeit der Kommunikation. Auf diese Art und Weise läßt sich also unter Ausnutzung der Vorteile eines optischen Systems ein Voll-Duplex-Betrieb erreichen, der es gestattet, mehrkanalig auf mehreren Kommunikationsebenen gleichzeitig zu kommunizieren.

In einer weiteren bevorzugten Ausführungsform sind alle vorhandenen Übertragungsstrecken ummantelt.

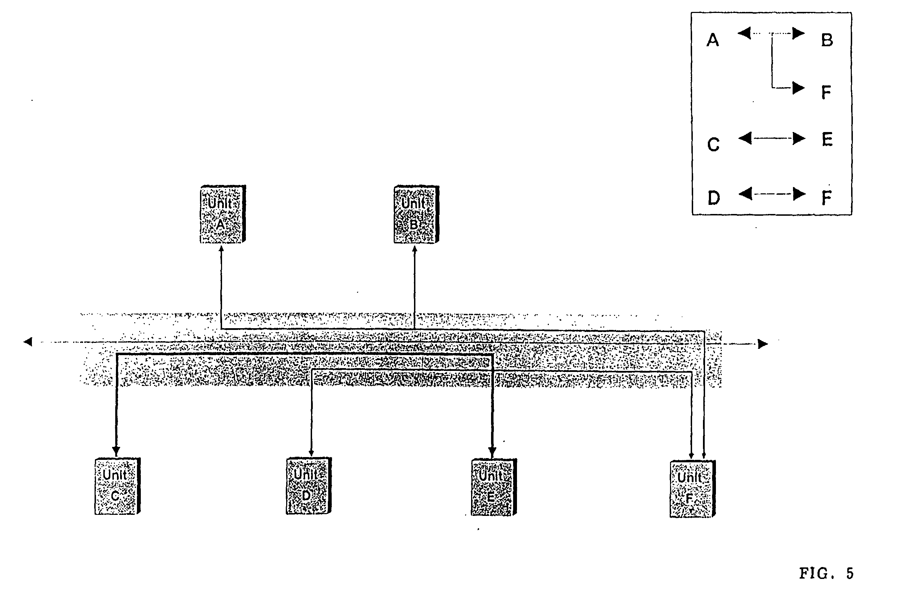

Das hat zur Folge, daß gleichzeitig mehrere Anwender auf das gleiche Bussystem zugreifen können. Ein solcher "Multiple Simultaneous Access" ist in Fig. 5 gezeigt.

So gestattet das erfindungsgemäße Übertragungssystem bspw. eine gleichzeitige Kommunikation des Subsystems A mit den Subsystemen B und F. Gleichzeitig mit dieser Kommunikation ist es möglich, daß bspw. die Subsysteme C und E bzw. D und F miteinander kommunizieren. Auf diese Weise können Informationen parallel unter den Subsystemen übertragen werden, ohne daß eine Behinderung der einzelnen Übertragungsstrecken auftritt. Selbstverständlich können an den einzelnen Subsystemen Anordnungen vorgesehen werden, die ein entsprechendes Handling der Informationen für das jeweilige Subsystem übernehmen.

## Patentansprüche

1. System zur bidirektionalen optischen Übertragung von Informationen mit Hilfe diffusen Lichts zwischen mehreren elektronischen Komponenten (3, 5) mit n verschiedenen Übertragungsstrecken zwischen jeweils zwei Komponenten, wobei
für mindestens (n-1) Übertragungsstrecken eine Ummantelung (12) vorgesehen ist, so dass eine gegenseitige Beeinflussung der Übertragungsstrecken verhindert wird,
**dadurch gekennzeichnet,**
**dass** die n verschiedenen Übertragungsstrecken nebeneinander angeordnet sind und dass die Informationen mittels on-off-keying übertragen werden, und
**dass** die Ummantelung integraler Bestandteil eines Gehäuses ist, in dem die elektronischen Komponenten eingebettet sind.

2. System nach Anspruch 1, **dadurch gekennzeichnet, dass** das diffuse Licht IR-Licht ist.

3. System nach einem der Ansprüche 1 oder 2, **dadurch gekennzeichnet, dass** die Übertragungsstrecken Sendeund/oder Empfangsvorrichtungen (13, 15) aufweisen.

4. System nach Anspruch 3, **dadurch gekennzeichnet, dass** es sich bei der Sende- und Empfangsvorrichtung (13, 15) um eine IR-Diode handelt.

5. System nach einem der vorhergehenden Ansprüche, **dadurch gekennzeichnet, dass** die Ummantelung eine lichtreflektierende Innenoberfläche aufweist.

6. System nach Anspruch 5, **dadurch gekennzeichnet, dass** die Innenoberfläche porös ist.

7. System nach einem der vorhergehenden Ansprüche, **dadurch gekennzeichnet, dass** die Ummantelung aus Magnesium besteht.

8. System nach einem der vorhergehenden Ansprüche, **dadurch gekennzeichnet, dass** die elektronischen Komponenten (3, 5) in einer definierten räumlichen Anordnung hintereinander angeordnet sind, wobei die einzelnen Komponenten jeweils über die ummantelten Kanäle miteinander verbunden sind.

9. System nach einem der Ansprüche 1 bis 8, **dadurch gekennzeichnet, dass** acht Übertragungsstrecken nebeneinander angeordnet sind.

10. System nach einem der vorhergehenden Ansprüche, **dadurch gekennzeichnet, dass** alle Übertragungsstrecken ummantelt sind.

11. Verfahren zur bidirektionalen optischen Übertragung von Informationen mit Hilfe diffusen Lichts zwischen mehreren elektronischen Komponenten (3, 5) mit n Übertragungsstrecken, wobei
mindestens (n-1) Übertragungsstrecken derart ummantelt werden, dass eine gegenseitige Beeinflussung der Übertragungsstrecken verhindert wird,
dass die Übertragung der Informationen mittels on-off-keying erfolgt, und dass die einzelnen Komponenten so hintereinander angeordnet werden, dass sie jeweils über ummantelte Kanäle (12) verbunden werden.

12. Verwendung des Systems nach einem oder mehreren der Ansprüche 1 bis 10 als optisches Bus-System für elektronische Systeme.

## Claims

1. A system for bidirectional optical transmission of information with the aid of diffuse light between a plurality of electronic components (3,5) with n different transmission links between any two components, whereby sheathing (12) is provided for at least (n-1) transmission links so that mutual interference of the transmission links is prevented,
**characterised in that**
the n different transmission links are arranged adjacent to one another and that the information is transmitted by means of on-off keying, and that
the sheathing is an integral component of a housing in which the electronic components are embedded.

2. System according to Claim 1, **characterised in that** the diffuse light is IR light.

3. System according to Claim 1 or 2, **characterised in that** the transmission links have transmitting and/or receiving devices (13,15).

4. System according to Claim 3, **characterised in that** the transmitting and receiving devices (13,15) are IR diodes.

5. System according to one of the preceding claims, **characterised in that** the sheathing has a light-reflecting inner surface.

6. System according to Claim 5, **characterised in that** the inner surface is porous.

7. System according to one of the preceding claims, **characterised in that** the sheathing consists of magnesium.

8. System according to one of the preceding claims, **characterised in that** the electronic components (3,5) are arranged in series in a defined spatial arrangement, the individual components being connected to one another in every case via the sheathed channels.

9. System according to one of Claims 1 to 8, **characterised in that** eight transmission links are arranged adjacent to one another.

10. System according to one of the preceding claims, **characterised in that** all the transmission links are sheathed.

11. Method for bidirectional optical transmission of information with the aid of diffuse light between a plurality of electronic components (3,5) with n transmission links wherein
at least (n-1) transmission links are sheathed in such a way that mutual interference of the transmission links is prevented,
**characterised in that**
the transmission of information is by on-off keying, and that the individual components are arranged in series in such a way that they are linked in every case via sheathed channels (12).

12. Application of the system according to one or more of Claims 1 to 10 as an optical bus system for electronic systems.

## Revendications

1. Système de transmission optique bidirectionnelle d'informations à l'aide de lumière diffuse, entre une pluralité de composants électroniques (3, 5) avec n chemins de transmission différents entre chaque fois deux composants, où
pour au moins (n-1) chemins de transmission, est prévu un enveloppement (12), de sorte que toute influence mutuelle des chemins de transmission est empêchée,
**caractérisé en ce que**
les n chemins de transmission différents sont disposés les uns à côté des autres et **en ce que** les informations sont transmises par un codage par tout ou rien, et
**en ce que** l'enveloppement est un composant monobloc d'un boîtier, dans lequel sont incorporés les composants électroniques.

2. Système selon la revendication 1, **caractérisé en ce que** la lumière diffuse est une lumière IR.

3. Système selon l'une des revendications 1 ou 2, **caractérisé en ce que** les chemins de transmission présentent des dispositifs émetteurs et/ou récepteurs (13, 15).

4. Système selon la revendication 3, **caractérisé en ce qu'**il s'agit, concernant le dispositif émetteur et récepteur (13, 15), d'une diode IR.

5. Système selon l'une des revendications précédentes, **caractérisé en ce que** l'enveloppement présente une surface intérieure, réfléchissant la lumière.

6. Système selon la revendication 5, **caractérisé en ce que** la surface intérieure est poreuse.

7. Système selon l'une des revendications précédentes, **caractérisé en ce que** l'enveloppement est formé de magnésium.

8. Système selon l'une des revendications précédentes, **caractérisé en ce que** les composants électroniques (3, 5) sont disposés les uns derrière les autres en un agencement spatial défini, sachant que les différents composants sont chacun reliés ensemble par l'intermédiaire des canaux enveloppés.

9. Système selon l'une des revendications 1 à 8, **caractérisé en ce que** huit chemins de transmission sont disposés les uns à côté des autres.

10. Système selon l'une des revendications précédentes, **caractérisé en ce que** tous les chemins de transmission sont enveloppés.

11. Procédé de transmission optique bidirectionnelle d'informations à l'aide de lumière diffuse, entre une pluralité de composants électroniques (3,5) avec n chemins de transmission, où
au moins (n-1) chemins de transmission sont enveloppés de manière que toute influence mutuelle des chemins de transmission soit empêchée,
**caractérisé en ce que**
la transmission des informations se fait par codage par tout ou rien, et en ce les différents composants sont disposés les uns derrière les autres, de manière à ce qu'ils soient chaque fois reliés par l'intermédiaire de canaux (12) enveloppés.

12. Utilisation du système selon l'une ou plusieurs des revendications 1 à 10, en tant que système de bus optique, pour des systèmes électroniques.
